(19) Europäisches Patentamt
European Patent Office
Office européen des brevets

(11) **EP 1 515 133 B1**

(12) **EUROPEAN PATENT SPECIFICATION**

(45) Date of publication and mention
of the grant of the patent:
**03.12.2008 Bulletin 2008/49**

(51) Int Cl.:
***G01N 21/27*** *(2006.01)*    ***H01L 21/306*** *(2006.01)*

(21) Application number: **04021357.1**

(22) Date of filing: **08.09.2004**

(54) **Method for determining the concentration of a component in a solution**

Verfahren zur Bestimmung der Komponentenkonzentration in einer Lösung

Procédé de détermination de la concentration d'un composant d'une solution

(84) Designated Contracting States:
**DE FR**

(30) Priority: **09.09.2003 JP 2003317131**

(43) Date of publication of application:
**16.03.2005 Bulletin 2005/11**

(73) Proprietor: **HORIBA, LTD.**
**Kyoto (JP)**

(72) Inventors:
• **Yokoyama, Issei**
**c/o Horiba, Ltd.**
**Minami-ku**
**Kyoto (JP)**
• **Yuhara, Yoshihito**
**c/o Horiba, Ltd.**
**Minami-ku**
**Kyoto (JP)**
• **Kojima, Junji**
**c/o Horiba, Ltd.**
**Minami-ku**
**Kyoto (JP)**

• **Yada, Takaaki**
**c/o Horiba, Ltd.**
**Minami-ku**
**Kyoto (JP)**

(74) Representative: **Müller - Hoffmann & Partner**
**Patentanwälte**
**Innere Wiener Strasse 17**
**81667 München (DE)**

(56) References cited:
**EP-A- 0 418 799          EP-A- 0 559 305**
**US-A1- 2003 052 272**

• **PATENT ABSTRACTS OF JAPAN vol. 2000, no. 20, 10 July 2001 (2001-07-10) -& JP 2001 066251 A (HORIBA LTD), 16 March 2001 (2001-03-16)**
• **PATENT ABSTRACTS OF JAPAN vol. 1998, no. 06, 30 April 1998 (1998-04-30) & JP 10 030982 A (HORIBA LTD), 3 February 1998 (1998-02-03)**
• **PATENT ABSTRACTS OF JAPAN vol. 2003, no. 08, 6 August 2003 (2003-08-06) & JP 2003 121352 A (HORIBA LTD), 23 April 2003 (2003-04-23)**

**Description**

BACKGROUND OF THE INVENTION

Field of the Invention

The present invention relates to a measuring method of component concentration in solution.

Description of the Prior Art

To calculate component concentrations in solution at various temperatures, hitherto, calibration coefficients $M_{ij}$ $(T_1)$, $M_{ij}(T_2)$, ... $M_{ij}(T_k)$ at plural temperatures $T_1$, $T_2$, ... $T_k$ are determined, and at T = about $T_k$, the component concentration in solution $C_i$ (T) is calculated by the following formula:

$$C_i \ (T) = \sum_{j=1}^{m} M_{ij} \ (T_k) \ S \ (\lambda_j . \ T) + M_{i0} \ (T_k) \qquad \cdots \ (1)$$

In formula (1), i denotes a component, $\lambda_j$ denotes j-th wavelength, and $S(\lambda_j, T)$ denotes the solution spectrum at arbitrary temperature T at j-th wavelength $\lambda_j$.
It, however, takes a lot of steps to obtain plural calibration coefficients of which calculation requires most time and labor.
In Japanese patent application JP 2001066251 mixed liquids of water-based organic solutions are described. In order to separate the concentrations of each constituent contained in the multicomponent organic solution, a near infrared absorption spectrum within a specific wavelength range is measured.
In US 2003/0052272 a liquid concentration detection method is described in which light beams of different wavelength bands are irradiated on to a solution and constituents contained in the solution are detected.
The invention is devised in the light of the above background, and it is hence an object thereof to present a measuring method of component concentration in solution capable of calculating component concentration in solution at various temperatures in a small number of steps.

SUMMARY OF THE INVENTION

To achieve the object, the measuring method of determining component concentration in a solution according to the invention is defined in claim 1.
In the invention, the solvent spectrum B $(\lambda_j, T)$ is preferred to be expressed as

$$B \ (\lambda_j . \ T) = \sum_{i=1}^{n} k_i \ (\lambda_j) \ (T - T_0)^i$$

wherein $k_i \ (\lambda_j)$: coefficient of degree of i about temperature at j-th wavelength $\lambda_j$ (claim 2).
In the invention, by calculating the differential spectrum of solution spectrum S $(\lambda_j, T)$ at temperature T at j-th wavelength $\lambda_j$ and solvent spectrum B $(\lambda_j, T)$ at temperature T at j-th wavelength $\lambda_j$, by the calibration coefficient $M_{ij}(T_0)$ for measurement of concentration $C_i$ of component i in the solution at reference temperature To determined preliminarily, the concentration of component i in the solution is calculated (claim 1). That is, in the invention, solution spectrum S $(\lambda_j, T)$ and solvent spectrum B $(\lambda_j, T)$ at various temperatures T can be determined as measured physical quantities, and instead of using plural calibration coefficients $M_{ij}(T_1)$, $M_{ij}(T_2)$, ... $M_{ij}(T_k)$ at plural temperatures $T_1$, $T_2$, ... $T_k$ as conventional method, by using only one calibration coefficient $M_{ij}(T_0)$(i is component in solution, and j is wavelength point) at reference temperature To, components concentration in solution at various temperatures can be calculated.
That is, this invention requires only one calibration coefficient of which calculation takes most time and labor, and the number of steps for acquiring the calibration coefficient is saved.
Also in the invention, the solvent spectrum B $(\lambda_j, T)$ at temperature T in j-th wavelength $\lambda_j$ is expressed as

$$B(\lambda_j, T) = \sum_{i=1}^{n} k_i(\lambda_j)(T - T_0)^i$$

wherein $k_i(\lambda_j)$: coefficient of degree of i about temperature at j-th wave length $\lambda_j$ (claim 2), and B ($\lambda_j$, T) is used by defining the n-th degree fun ction of (T-$T_0$).

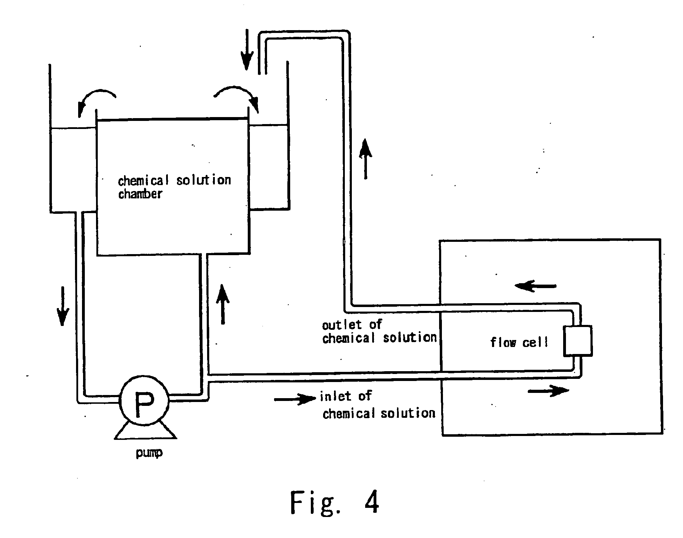

For example, the invention is applied in support of concentration management in a one-bath apparatus (see Fig. 4) for keeping constant the concentration of chemical solution at high temperature (for example, 65° C or 75° C) used in removal of particles in the cleaning process of wafers or the like in semiconductor manufacturer. As shown in Fig. 4, in the one-bath apparatus, the chemical solution at high temperature (for example, aqueous solution of ammonia and hydrogen peroxide: $NH_3/H_2O_2/H_2O$) is directly supplied into a flow cell by a circulation pump, and the concentration of components ($NH_3$, $H_2O_2$, $H_2O$) of the chemical solution are always monitored so that the concentration of the chemical solution may be kept within an allowable range (concentration measuring range of $NH_3$: for example, 0.00 to 1.00%, concentration measuring range of $H_2O_2$: for example, 0.0 to 5.00%, concentration measuring range of $H_2O$: for example, 94.0 to 100.0%), and measurement results of the monitoring of concentration must be fed back to keep constant the concentration. In this case, for optimum feedback control depending on the concentration changes of chemical solution, quick measuring response of concentration monitor is required, and in the invention, by preliminarily measuring and storing

$$\sum_{i=1}^{n} k_i(\lambda_j)(T - T_0)^i$$

quick measuring response is realized when monitoring the concentration, and the follow-up performance depending on concentration changes of the chemical solution can be enhanced.

BRIEF DESCRIPTION OF THE DRAWINGS

Fig. 1 is a characteristic diagram used in explanation of calculation of temperature correction in a preferred embodiment of the invention;
Fig. 2A is a diagram showing measurement results by temperature correction in the preferred embodiment;
Fig. 2B is a diagram showing measurement results without temperature correction;
Fig. 3A is a three-dimensional graph by water temperature, wavelength point, and absorbance in the case of solvent spectrum B ($\lambda_j$, T) expressed by quadratic function of (T-$T_0$) in the preferred embodiment;
Fig. 3B is a three-dimensional graph by water temperature, wavelength point, and absorbance as seen from other aspect in the case of solvent spectrum B ($\lambda_j$, T) expressed by quadratic function of (T-$T_0$) in the preferred embodiment; and
Fig. 4 is a structural explanatory diagram of one-bath apparatus according to the preferred embodiment.

DETAILED DESCRIPTION OF THE PREFERRED EMBODIMENTS

Preferred embodiments of the invention are described below by referring to accompanying drawings. It must be noted, however, that the invention is not limited by the illustrated preferred embodiments.
In the measuring method of component concentration in solution of the invention, first of all, calibration coefficient $M_{ij}(T_0)$ is determined preliminarily to measure the concentration C; of component i in the solution at reference temperature To (for example, 25° C). At this time,

$$C_i(T_0) = \sum_{j=1}^{m} M_{ij}(T_0) S(\lambda_j, T_0) + M_{io}(T_0) \qquad \cdots (2)$$

wherein S($\lambda_j$, $T_0$) indicates the solution spectrum (absorbance spectrum, etc.) at reference temperature $T_0$ at j-th wavelength $\lambda_j$, and $M_{io}(T_0)$ is a constant not depending on the solution spectrum S($\lambda_j$, $T_0$), and relating to component i at

reference temperature $T_o$.

Suppose the solvent spectrum of solvent (for example, $H_2O$) as principal component of solution at temperature T at j-th wavelength $\lambda_j$ to be B ($\lambda_j$, T). At this time, it is defined so that the solvent spectrum B ($\lambda_j$, $T_o$) at reference temperature $T_o$ at j-th wavelength $\lambda_j$ may be zero in all wavelengths (the reference is shifted). That is,

$$B(\lambda_j, T_o) = 0 \qquad \cdots (3)$$

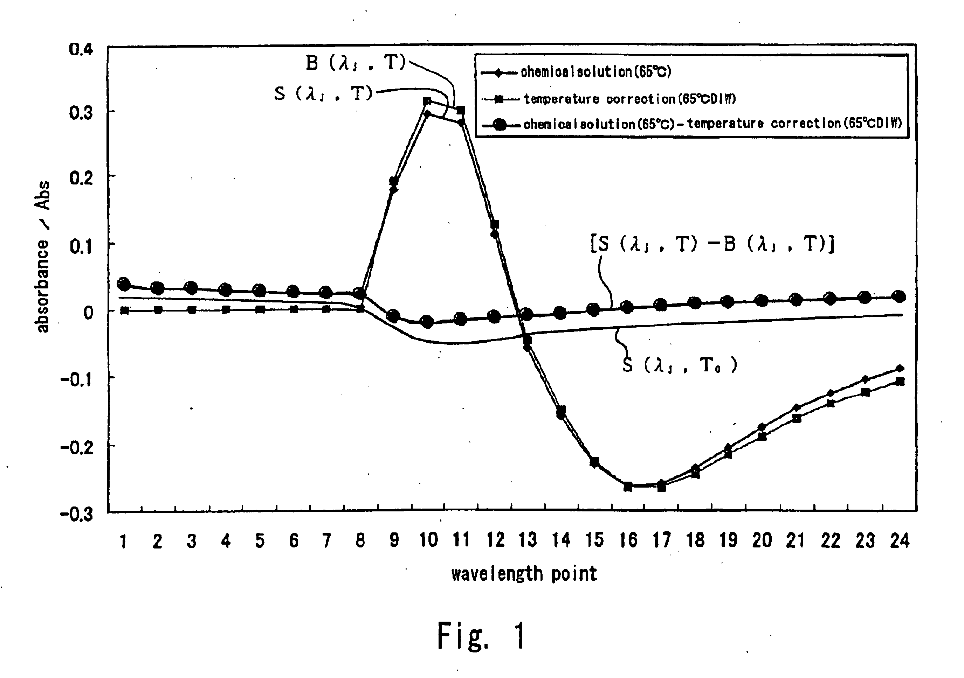

At this time, as shown in Fig. 1, the differential spectrum of solution spectrum S ($\lambda_j$, T) at temperature T at j-th wavelength $\lambda_j$ and solvent spectrum B ($\lambda_j$, T) at temperature T at j-th wavelength $\lambda_j$ (see Fig. 1) is, when the solvent concentration is high, for example, 95% or more, approximately equal to the difference between the solution spectrum S ($\lambda_j$, $T_o$) at reference temperature $T_o$ at j-th wavelength $\lambda_j$ and solvent spectrum B ($\lambda_j$, $T_o$) at reference temperature $T_o$ at j-th wavelength $\lambda_j$, as known from the experiment by the present inventors. That is,

$$S(\lambda_j, T) - B(\lambda_j, T) \fallingdotseq S(\lambda_j, T_o) - B(\lambda_j, T_o)$$
$$= S(\lambda_j, T_o) \qquad \cdots (4)$$

Therefore, putting $S(\lambda_j, To)$ in formula (2) into formula (4), and replacing $C_i(T_o)$ in formula (2) with $C_i(T)$, the component concentration at temperature T after temperature correction can be expressed in the following formula.

$$C_i(T) \fallingdotseq \sum_{j=1}^{m} M_{ij}(T_o) [S(\lambda_j, T) - B(\lambda_j, T)] + M_{io}(T_o)$$
$$\cdots (5)$$

In the embodiment shown in Fig. 1, the chemical solution at the same temperature (65° C) as when using $H_2O$ at 65° C as solvent is used as the solution.

From formula (5), only by determining the calibration coefficient $M_{ij}(T_o)$ of solution at reference temperature $T_o$, and solution spectrum S ($\lambda_j$, T) and solvent spectrum B ($\lambda_j$, T) at various temperatures, the component concentrations in the solution can be calculated, and only one calibration coefficient consuming time in calculation is enough, and the number of steps can be saved.

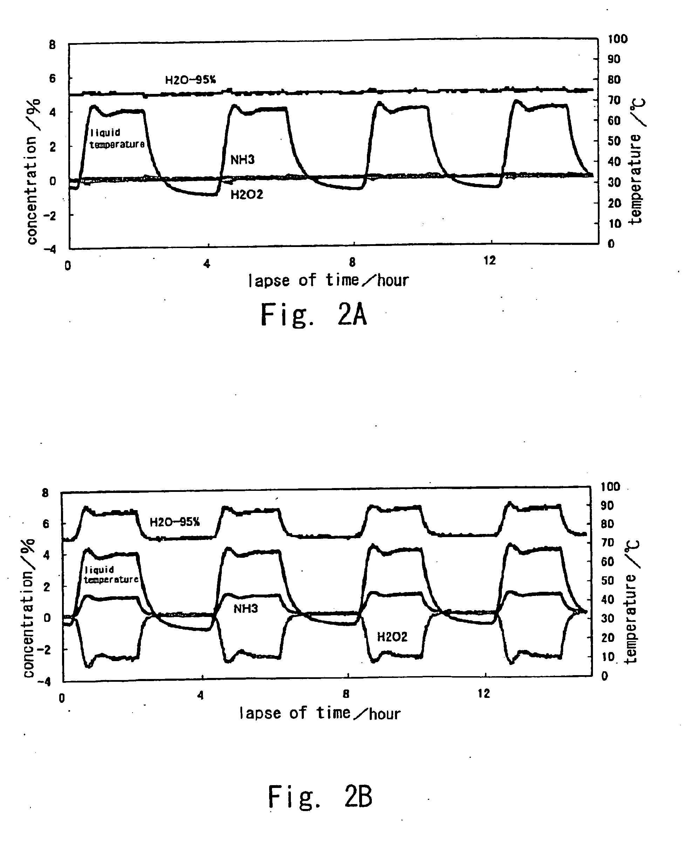

Fig. 2 shows the temperature correction effect of the invention, recording the measurement results of application of the invention, for example, in calculation of concentration of components ($NH_3$, $H_2O_2$, $H_2O$) of the chemical solution at high temperature (for example, aqueous solution of ammonia and hydrogen peroxide) used in wafer cleaning. In this example, the chemical solution at the same temperature (75° C) as when using $H_2O$ at 75° C as solvent is used as the solution.

Fig. 2A shows measurement results obtained from formula (5) of the invention by temperature correction. Fig. 2B shows measurement results in a comparative example without temperature correction, and the result is calculated directly from formula (2) without putting formula (4) into S ($\lambda_j$, To) in formula (2).

As known from Fig. 2A, the chemical solution at high temperature contains almost only $H_2O$ at 75° C. In Fig. 2B, although $NH_3$ and $H_2O_2$ are not actually contained, the concentration and temperature of these components and $H_2O$ vary with the lapse of time.

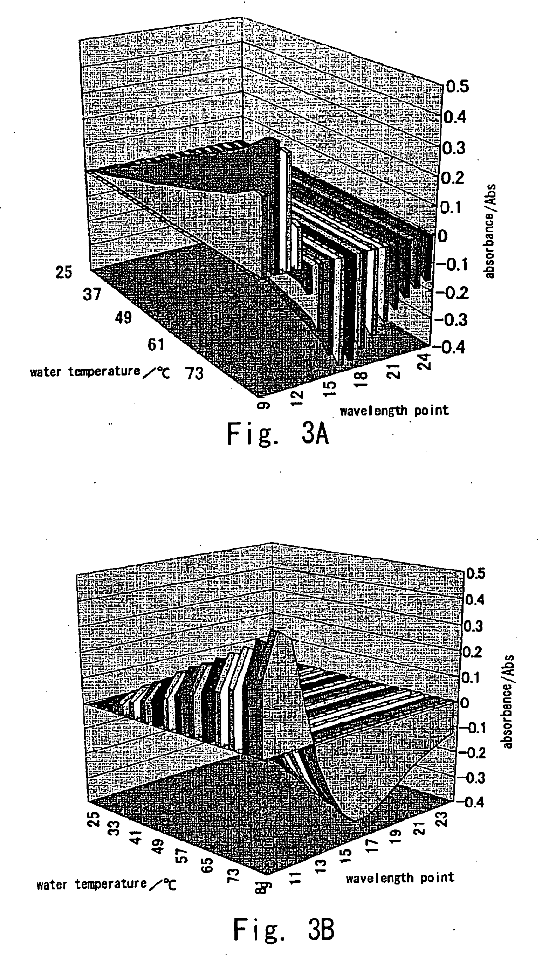

Fig. 3 shows three-dimensional graphs by water temperature, wavelength point, and absorbance in the case of solvent spectrum B ($\lambda_j$, T) expressed by quadratic function of ($T-T_o$). Fig. 3A and Fig. 3B shows different aspects of the same data.

**Claims**

1. A measuring method of determining component concentration in a solution $C_i(T)$ using the equation

$$C_i(T) = \Sigma_{J=1, m} M_{i,j}(T_k) S(\lambda_j, T) + M_{i,0}(T_k) \qquad (1)$$

where T is an arbitrary temperature, and T is about $T_k$, by using a solution spectrum $S(\lambda_j, T)$ and a solvent spectrum $B(\lambda_j, T)$ at each wavelength j, **characterized by** preliminarily determining a calibration coefficient $M_{i,j}(T_0)$ using the following equation for the concentration $C_i$ of component i in the solution at a reference temperature To

$$C_i(T_0) = \Sigma_{J=1, m} M_{i,j}(T_0) S(\lambda_j, T_0) + M_{i,0}(T_0) \qquad (2)$$

where $M_{i,0}(T_0)$ is a constant independent from the solution spectrum, further comprising the steps of:

- obtaining a difference spectrum of solution spectrum $S(\lambda_j, T)$ and solvent spectrum $B(\lambda_j, T)$ at temperature T at j-th wavelength $\lambda_j$,

$$S(\lambda_j, T) - B(\lambda_j, T) = S(\lambda_j, T_0), \qquad (3)$$

- obtaining the calibration coefficient $M_{i,j}(T_k)$ as a function of $M_{ij}(T_0)$ from the equivalence $C_i(T) = C_i(T_0)$ and
- by replacing said calibration coefficient $M_{i,j}(T_k)$ in equation (1) obtaining the following equation for determining the component concentration in solution:

$$C_i(T) = \Sigma_{J=1, m} M_{i,j}(T_0) [S(\lambda_j, T) - B(\lambda_j, T)] + M_{i,0}(T_0). \qquad (4)$$

**2.** A measuring method of determining component concentration in solution according to claim 1, wherein the solvent spectrum $B(\lambda_j, T)$ is preferred to be expressed as

$$B(\lambda_j, T) = \Sigma_{i=1, n} k_i(\lambda_j) \times (T - T_0)^i$$

where $k_i(\lambda_j)$ is the coefficient of degree of i about temperature at j-th wavelength $\lambda_j$.

**Patentansprüche**

**1.** Messverfahren zur Bestimmung der Komponentenkonzentration $C_i(T)$ in einer Lösung unter Verwendung der Gleichung:

$$C_i(T) = \Sigma_{J=1,m} M_{i,j}(T_k) S(\lambda_j, T) + M_{i,0}(T_k) \qquad (1)$$

wobei T eine beliebige Temperatur darstellt und T etwa $T_k$ ist, unter Verwendung eines Lösungsspektrums $S(\lambda_j, T)$ und eines Lösungsmittelspektrums $B(\lambda_j, T)$ bei jeder Wellenlänge j, **dadurch gekennzeichnet, dass** vorher ein Kalibrierungskoeffizient $M_{i,j}(T_0)$ bestimmt wird, unter Verwendung der folgenden Gleichung für die Konzentration $C_i$ der Komponente i in der Lösung bei einer Referenztemperatur $T_0$

$$C_i(T_0) = \Sigma_{J=1,m} M_{i,j}(T_0) S(\lambda_j, T_0) + M_{i,0}(T_0) \qquad (2)$$

wobei $M_{i,0}(T_0)$ eine Konstante darstellt, die vom Lösungsspektrum unabhängig ist, weiterhin umfassend die Schritte:

- Erhalten eines Differenzspektrums des Lösungsspektrums $S(\lambda_j, T)$ und des Lösungsmittelspektrums $B(\lambda_j, T)$ bei einer Temperatur T bei der j-ten Wellenlänge $\lambda_j$.

$$S(\lambda_j, T) - B(\lambda_j, T) = S(\lambda_j, T_0) \qquad (3)$$

- Erhalten des Kalibrierungskoeffizienten $M_{i,j}(T_k)$ als eine Funktion von $M_{ij}(T_o)$ aus der Äquivalenz $C_i(T) = C_i(T_o)$ und
- Ersetzen des Kalibrierungskoeffizienten $M_{i,j}(T_k)$ in Gleichung (1), wodurch die folgende Gleichung zur Bestimmung der Komponentenkonzentration in Lösung erhalten wird:

$$C_i(T) = \Sigma_{J=1,m} M_{i,j}(T_0)[\ S(\lambda_j, T) - B(\lambda_j, T)] + M_{i,0}(T_0). \qquad (4)$$

**2.** Messverfahren zur Bestimmung der Komponentenkonzentration in Lösung nach Anspruch 1, wobei das Lösungsmittelspektrum $B(\lambda_j, T)$ bevorzugt ausgedrückt wird als

$$B(\lambda_j, T) = \Sigma_{i=1,n} k_i(\lambda_j) \ x \ (T - T_0)^i$$

wobei $k_i(\lambda_j)$ der Koeffizient des Grades von i über die Temperatur bei der j-ten Wellenlänge $\lambda_j$ darstellt.

**Revendications**

**1.** Procédé de mesure pour déterminer la concentration d'un composant dans une solution $C_i(T)$ à l'aide de l'équation

$$C_i(T) = \Sigma_{j=1,m} M_{i,j}(T_k) S(\lambda_j, T) + M_{i,0}(T_k) \qquad (1)$$

dans laquelle T est une température arbitraire et T est environ $T_k$, à l'aide d'un spectre de solution $S(\lambda_j, T)$ et d'un spectre de solvant $B(\lambda_j, T)$ à chaque longueur d'onde j, **caractérisé par** la détermination préliminaire d'un coefficient d'étalonnage $M_{i,j}(T_o)$ à l'aide de l'équation suivante pour la concentration $C_i$ du composant i dans la solution à une température de référence $T_0$

$$C_i(T_0) = \Sigma_{j=1,m} M_{i,j}(T_0) S(\lambda_j, T_0) + M_{i,0}(T_0) \qquad (2)$$

dans laquelle $M_{i,0}(T_0)$ est une constante indépendante du spectre de solution, et comprenant également les étapes qui consistent à :

- obtenir un spectre différentiel du spectre de solution $S(\lambda_j, T)$ et du spectre de solvant $B(\lambda_j, T)$ à la température T et à la jième longueur d'onde $\lambda_j$,

$$S(\lambda_j, T) - B(\lambda_j, T) = S(\lambda_j, T_0), \qquad (3)$$

- obtenir le coefficient d'étalonnage $M_{i,j}(T_k)$ en fonction de $M_{i,j}(T_o)$ à partir de l'équivalence $C_i(T) = C_i(T_o)$, et
- remplacer ledit coefficient d'étalonnage $M_{i,j}(T_k)$ dans l'équation (1), pour obtenir ainsi l'équation suivante pour déterminer la concentration du composant dans la solution :

$$C_i(T) = \Sigma_{j=1,m} M_{i,j}(T_0) [S(\lambda_j, T) - B(\lambda_j, T)] + M_{i,0}(T_0).$$ (4)

2. Procédé de mesure pour déterminer la concentration d'un composant dans une solution, selon la revendication 1, dans lequel le spectre de solvant $B(\lambda_j, T)$ est de préférence exprimé sous la forme

$$B(\lambda_j, T) = \Sigma_{i=1,n} k_i(\lambda_j) x (T - T_0)^i$$

où $k_i(\lambda_j)$ est le coefficient de degré i près de la température à la jième longueur d'onde $\lambda_j$.

Fig. 1

EP 1 515 133 B1

Fig. 2A

Fig. 2B

Fig. 3A

Fig. 3B

chemical solution
chamber

outlet of
chemical solution

flow cell

inlet of
chemical solution

P

pump

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001066251 B
- US 20030052272 A